# EUROPEAN PATENT APPLICATION

(11) **EP 4 467 402 A1**
(43) Date of publication of application: **27.11.2024**
(21) Application number: 24176459.6
(22) Date of filing: 16.05.2024
(51) Int. Cl.: B60S 1/34, B33Y 80/00, B60S 1/32

(54) **COMPOSITE WIPER ARMS**

(30) Priority: 23.05.2023 IN 202341035787; 31.07.2023 US 202318228205
(71) Applicant: Goodrich Aerospace Services Private Limited, 560048 Bangalore (IN)
(72) Inventor: NOUDURI, Phani Srinivas, 560066 Kundanahalli, Bangalore (IN); JEYAPAUL, Elbert, 560067 Bangalore (IN); DEVADOSS MARIO, Pravin Kumar, 500070 Hyderabad (IN); MOTHE, Venkata Anil Kumar, Bangalore (IN)
(74) Representative: Dehns

(57) **Abstract**

A wiper apparatus includes a wiper arm (110) extending from a first wiper arm end (102) to second wiper arm end (104). The wiper arm (110) has an airfoil profile. The wiper arm (110) includes a core having a lattice structure with shell extending around the lattice structure. A composite layer is formed around the core. The composite layer conforms to an outer surface of the shell. A method of making a wiper apparatus includes forming a core of a wiper arm (110) with a lattice structure surrounded by a shell. The method includes depositing a layer of composite material on an outer surface of the shell.

## Description

### BACKGROUND

### 1. Field

The present disclosure relates to wiper arms for windshield wipers, and more particularly to wiper arms for windshield wipers such as used on aircraft cockpits on fixed wing aircraft, rotary wing aircraft, and the like.

### 2. Description of Related Art

Traditional aircraft windshield wiper arms for aircraft cockpits are manufactured from metallic materials such as stainless steels. They are sized for the loading of the wiper blade assembly during operation. Drag induced by this component affects the mechanical loading of the wiper system, which in turn drives the sizing of the wiper arm and life of the wiper system.

The conventional techniques have been considered satisfactory for their intended purpose. However, there is an ever present need for improved systems and methods for wiper arms such as for use with aircraft cockpit windshields. This disclosure provides a solution for this need.

### SUMMARY

A wiper apparatus includes a wiper arm extending from a first wiper arm end to second wiper arm end. The wiper arm has an airfoil profile. The wiper arm includes a core having a lattice structure with shell extending around the lattice structure. A composite layer is formed around the core. The composite layer conforms to an outer surface of the shell.

The lattice structure and shell can be of the core are of a single, monolithic material. The single monolithic material can include at least one of metal or polymer. The lattice structure can include at least one fluid conduit configured to convey wiper fluid through the wiper arm. The wiper arm can define a curve so a first longitudinal axis of the wiper arm defined by the first wiper arm end is oblique relative to a second longitudinal axis of the wiper arm defined at the second wiper arm end.

A bridge can be mounted to the second wiper arm end of the wiper arm. A wiper blade can be operatively connected to the bridge for wiping a windshield. A wiper drive can be included, wherein the first wiper arm end is mounted to the wiper drive so the wiper drive can drive the wiper arm with reciprocating motion about a rotation axis. The airfoil profile can be oriented to generate downforce in airflow over the windshield to bias the wiper blade into the windshield. The airfoil profile can be configured to generate the downforce regardless of where the wiper arm is in a reciprocating stroke around the rotation axis.

A method of making a wiper apparatus includes forming a core of a wiper arm with a lattice structure surrounded by a shell. The method includes depositing a layer of composite material on an outer surface of the shell.

Depositing the layer of composite material on an outer surface of the shell can include surrounding the shell with the composite material. The composite material can include fiber prepreg layups. Forming the core can include forming the lattice structure and the shell of a single monolithic material using additive manufacturing. The single monolithic material can include at least one of metal or polymer.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic perspective view of an embodiment of a wiper apparatus constructed in accordance with the present disclosure, showing the components of the wiper assembled onto an aircraft cockpit windshield;
Fig. 2 is a schematic perspective view of the wiper apparatus of Fig. 1, showing the wiper axis;
Fig. 3 is a schematic perspective view of the wiper arm of the wiper apparatus of Fig. 1, showing the airfoil profile;
Fig. 4 is a schematic, partially cut away perspective view of the wiper arm of the wiper apparatus of Fig. 3, showing the lattice structure and fluid conduits;
Fig. 5 is a schematic axial cross-sectional elevation view of the core of the wiper arm of Figs. 3-4, showing the lattice structure and the shell around the lattice structure; and
Fig. 6 is a schematic axial cross-sectional elevation view of the wiper arm of Figs. 3-4, showing the wiper arm after depositing the composite material on the shell.

### DETAILED DESCRIPTION OF THE PREFERRED EMBODIMENTS

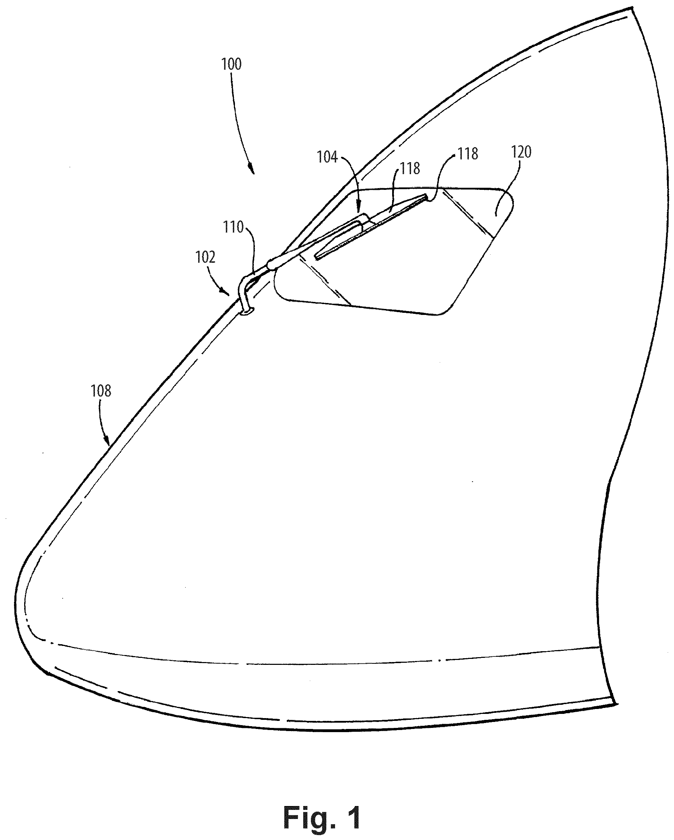

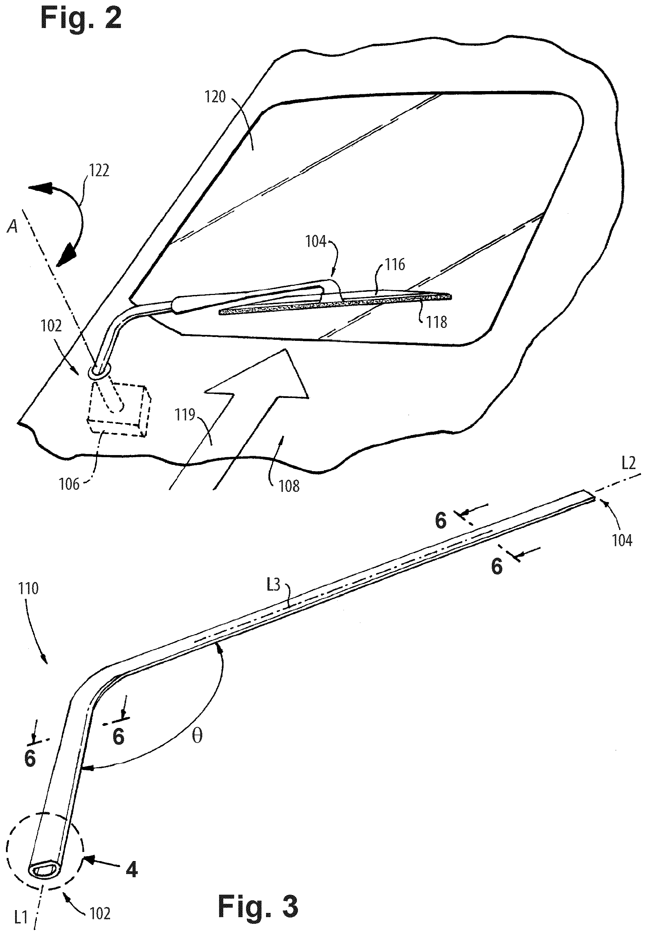

Reference will now be made to the drawings wherein like reference numerals identify similar structural features or aspects of the subject disclosure. For purposes of explanation and illustration, and not limitation, a partial view of an embodiment of a wiper apparatus in accordance with the disclosure is shown in Fig. 1 and is designated generally by reference character 100. Other embodiments of systems in accordance with the disclosure, or aspects thereof, are provided in Figs. 2-6, as will be described. The systems and methods described herein can be used to improve aerodynamics, weight, manufacturability, and overall performance of wiper arms and wiper systems such as for use on aircraft cockpit windshields.

The wiper apparatus 100 includes a wiper arm 110 extending from a first wiper arm end 102 to second wiper arm end 104. A bridge 116 is mounted to the second wiper arm end 104 of the wiper arm 110. A wiper blade 118 is operatively connected to the bridge 116 for wiping a windshield 120 of an aircraft 108, which can be any suitable type of fixed or rotary wing aircraft or the like.

With reference to Fig. 2, a wiper drive 106 is included. The first wiper arm end 102 is mounted to the wiper drive 106 so the wiper drive 106 can drive the wiper arm 110 with reciprocating motion or stroke (indicated in Fig. 2 by the double arrows 122) about a rotation axis A. The wiper arm 110 has an airfoil profile, shown in Figs. 3-6 and described further below, that is oriented to generate downforce in airflow 119 over the windshield 120 to bias the wiper blade 118 into the windshield 120, regardless of where the wiper arm 110 is in the reciprocating stroke 122 around the rotation axis A.

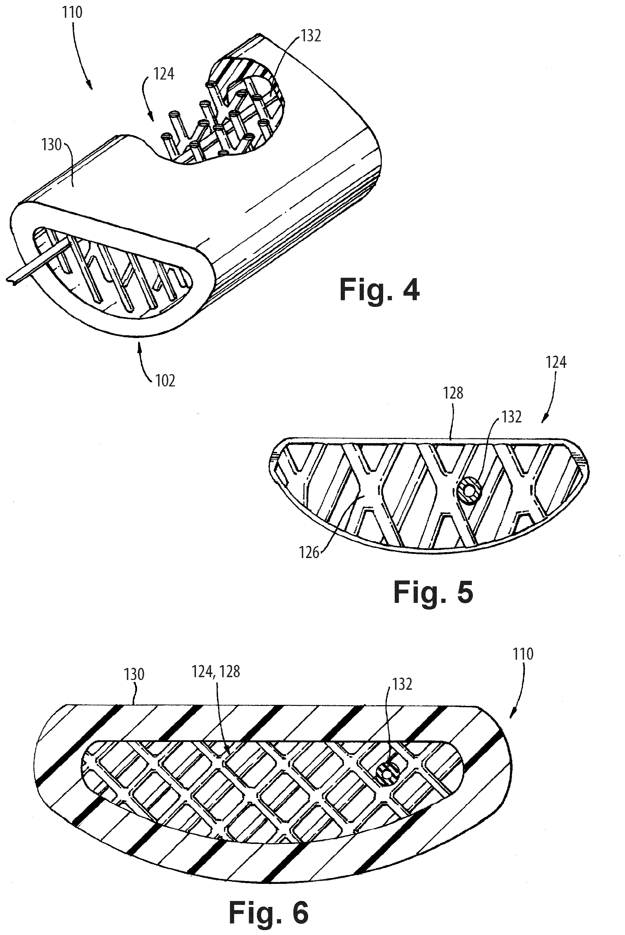

With reference now to Fig. 3, the wiper arm 110 has an airfoil profile in cross-section. The airfoil profile cross-section is shown in Fig. 6 and is labeled at two example locations in Fig. 3. The cross-section of the airfoil profile is taken normal to an axis L3, which is a bent axis defined between the first and second wiper arm ends 102, 104. The wiper arm defines a curve so a first longitudinal axis L1 of the wiper arm 110 defined by the first wiper arm end 102 is oblique by an angle θ relative to a second longitudinal axis L2 of the wiper arm 110 defined at the second wiper arm end 104.

With reference now to Figs. 5-6, the wiper arm 110 includes a core 124, which is shown in cross-section in Fig. 5. The core 124 has a lattice structure 126 with shell 128 extending around the lattice structure 126. As shown in Fig. 6, a composite layer 130 is formed around the core 124. The composite layer 130 conforms to an outer surface of the shell 128. The lattice structure 126 and shell 128 of the core 124 are of a single, monolithic material, e.g. a metal or polymer. The lattice structure 126 can optionally include one or more fluid channels or conduits 132 (also labeled in Fig. 4) configured to convey wiper fluid through the wiper arm 110, e.g. to be released onto the windshield 120 in Figs. 1-2.

With continued reference to Figs. 5-6, a method of making a wiper apparatus includes forming a core 124 of a wiper arm 110 with a lattice structure 126 surrounded by a shell 128. Forming the core 124 includes forming the lattice structure 126 and the shell 128 of a single monolithic material, e.g. using additive manufacturing. The method includes depositing a layer 130 of composite material on an outer surface of the shell 128. Depositing the layer 130 of composite material on an outer surface of the shell 128 includes surrounding the shell 128 with the composite material. The composite material can include any suitable composite material, such as fiber prepreg layups.

Systems and methods as disclosed herein allow for optimization of the arm cross-section to reduce aerodynamic drag and increase down force. This can reduce drag and weight of the wiper apparatus imposed on the aircraft. It is possible for a given application to choose an airfoil profile shape that produces highest downforce with minimal drag, i.e. to maximize the lift to drag ratio. Structural integrity need not compromised by an optimized cross-sectional shape. For example, systems and methods as disclosed herein can make it possible to have a downforce to drag ratio that is 50 times higher than a traditional wiper arm with a circular cross section, and wiper arms as disclosed herein can withstand up to or beyond 26% higher bending moment when compared to traditional wiper arms with the circular cross-section profile.

Systems and methods as disclosed herein can provide potential benefits including the following. They can provide improved aerodynamic performance that reduces torque requirement on the motor, thus improving aircraft efficiency. They can provide a reduction in overall weight of the arm assembly compared to conventional metallic wiper arms. They can increase downforce during cruise condition when the wiper system is non-operational, reducing the brake torque required to hold position of the wiper arm. They can also provide reduced unsteady aerodynamic loading due to streamlining. There can be a reduction in the spring load requirement due to additional downforce by the streamlining. The core can also include the wash line tubes as integral part of an additive-manufactured structure to simplify routing relative to using normal manufacturing processes. Achieving complex arm topologies can be done easily with composite manufacturing processes, enabling optimal design objectives.

The methods and systems of the present disclosure, as described above and shown in the drawings, provide for improved aerodynamics, weight, manufacturability, and overall performance of wiper arms and wiper systems such as for use on aircraft cockpit windshields. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A wiper apparatus comprising:
a wiper arm (110) extending from a first wiper arm end (102) to second wiper arm end (104), wherein the wiper arm (110) has an airfoil profile, wherein the wiper arm (110) includes:
a core (124) including a lattice structure (126) with shell extending around the lattice structure; and
a composite layer (130) formed around the core, wherein the composite layer conforms to an outer surface of the shell.

2. The apparatus as recited in claim 1, wherein the lattice structure and shell of the core are of a single, monolithic material.

3. The apparatus as recited in claim 2, wherein the single monolithic material includes at least one of metal or polymer.

4. The apparatus as recited in any preceding claim, wherein the lattice structure includes at least one fluid conduit configured to convey wiper fluid through the wiper arm (110).

5. The apparatus as recited in any preceding claim, wherein the wiper arm (110) defines a curve so a first longitudinal axis of the wiper arm (110) defined by the first wiper arm end (102) is oblique relative to a second longitudinal axis of the wiper arm (110) defined at the second wiper arm end (104).

6. The apparatus as recited in any preceding claim, further comprising a bridge mounted to the second wiper arm end (104) of the wiper arm (110).

7. The apparatus as recited in claim 6, further comprising a wiper blade operatively connected to the bridge for wiping a windshield.

8. The apparatus as recited in claim 7, further comprising a wiper drive, wherein the first wiper arm end (102) is mounted to the wiper drive so the wiper drive can drive the wiper arm (110) with reciprocating motion about a rotation axis.

9. The apparatus as recited in claim 8, wherein the airfoil profile is oriented to generate downforce in airflow over the windshield to bias the wiper blade into the windshield.

10. The apparatus as recited in claim 9, wherein the airfoil profile is configured to generate the downforce regardless of where the wiper arm (110) is in a reciprocating stroke around the rotation axis.

11. A method of making a wiper apparatus comprising:
forming a core of a wiper arm (110) with a lattice structure surrounded by a shell; and
depositing a layer of composite material on an outer surface of the shell.

12. The method as recited in claim 11, wherein depositing the layer of composite material on an outer surface of the shell includes surrounding the shell with the composite material.

13. The method as recited in claim 11 or 12, wherein the composite material includes fiber prepreg layups.

14. The method as recited in any of claims 11 to 13, wherein forming the core includes forming the lattice structure and the shell of a single monolithic material using additive manufacturing.

15. The method as recited in claim 14, wherein the single monolithic material includes at least one of metal or polymer.
